# EUROPÄISCHE PATENTSCHRIFT

(11) **EP 2 008 791 B1**
(45) Veröffentlichungstag und Bekanntmachung des Hinweises auf die Patenterteilung: **23.12.2009**
(21) Anmeldenummer: 08010851.7
(22) Anmeldetag: 14.06.2008
(51) Int. Cl.: B29C 45/76, B29C 45/77

(54) **Verfahren zur Durchführung des Schließkraftabbaus bei einer Schließeinheit einer Spritzgießmaschine**
Method for performing the reduction of the closing force in a closing unit of an injection moulding machine
Procédé pour effectuer la réduction de la force de fermeture pour une unité de fermeture d'une machine de moulage par injection

(30) Priorität: 28.06.2007 DE 102007029977
(43) Veröffentlichungstag der Anmeldung: 31.12.2008
(73) Patentinhaber: Sumitomo (SHI) Demag Plastics Machinery GmbH, 90571 Schwaig (DE)
(72) Erfinder: Mehler, Christoph, 88085 Langenargen (DE)
(74) Vertreter: Hübner, Gerd

(56) Entgegenhaltungen:
- AT-B- 384 772
- JP-A- 4 112 024
- JP-A- 6 039 892

## Beschreibung

Die vorliegende Erfindung betrifft ein Verfahren zur Durchführung des Schließkraftabbaus bei einer Schließeinheit einer Spritzgießmaschine.

Auf die Wirtschaftlichkeit eines Spritzgießprozesses hat die Zykluszeit einen wesentlichen Einfluss. Ziel bei der wirtschaftlichen Produktion eines Formteiles ist es, die für diesen Ablauf benötigte Zykluszeit auf ein Minimum zu reduzieren. Dadurch kann eine möglichst hohe Ausstoßleistung erzielt werden.

Die Verfahrensschritte, wie Werkzeug- und Aggregatbewegungen, Einspritzen, Nachdrücken, Kühlen sowie Dosieren sind feste Bestandteile eines jeden Zyklus. Die einzelnen Schritte laufen teilweise nacheinander ab, zum Teil überdecken sie sich zeitlich. Beispielsweise startet die Kühlzeit definitionsgemäß mit dem Beginn des Einspritzvorganges. Sie beinhaltet die komplette Nachdruckphase und endet schließlich mit dem Öffnungshub des Werkzeugs zur Entformung des fertigen Formteils. Nach der Nachdruckzeit beginnt die sogenannte Restkühlzeit. Die Kühlzeit eines spritzgegossenen Formteils beträgt meist mehr als 2/3 der gesamten Zykluszeit. Sie steigt mit dem Quadrat der Formteilwanddicke. In der Regel erstreckt sich die Kühlzeit über die Nachdruckphase hinaus, da das Formteil bis zum Abschluss der Nachdruckphase im Allgemeinen noch nicht hinreichend abgekühlt ist und somit für die Entformung noch nicht ausreichend dimensionsstabil ist. Mit dem Öffnen des Werkzeugs endet die Kühlzeit.

Demnach wird die Kühlzeit im Allgemeinen in die Abschnitte Einspritzzeit, Nachdruckzeit und Restkühlzeit unterteilt. Zur Ermittlung der gesamten Kühlzeit müssen die einzelnen Abschnitte möglichst genau abgeschätzt werden. Die Nachdruckzeit lässt sich durch die Bestimmung der Siegelzeit abschätzen. Die Siegelzeit bezeichnet den Zeitpunkt, bis zu dem noch Material mittels Nachdruck in die Kavität nachgeschoben werden kann, d.h. bis der Anschnitt bzw. der Anguss des Formteils erstarrt ist. In der Regel reichen etwa 30 % der Kühlzeit aus, bis der Anguss eingefroren ist. Dies hängt jedoch insbesondere vom Material und von der Formteilgeometrie/-dicke ab. Nach Erreichen der Siegelzeit ist es nicht mehr möglich, den Nachdruck wirkungsvoll aufrecht zu erhalten.

Wenn während des Formteilbildungsprozesses der Druck im Werkzeug auf Umgebungsdruck abgesunken ist, kann das Formteil meistens infolge mangelnder Formstabilität noch nicht entformt werden. Die Entformung eines thermoplastischen Bauteils kann erst auf einem niedrigeren Temperaturniveau geschehen, so dass das Formteil bis dahin weiter in der Werkzeugkavität heruntergekühlt werden muss. Allerdings ist es ab dem Erreichen des Umgebungsdruckes nicht mehr notwendig, den Schließdruck aufrechtzuerhalten.

Die ab dem Erreichen des Siegelpunktes noch zusätzlich erforderliche Verweilzeit im Werkzeug bis zur Entformung wird Restkühlzeit genannt. Die Restkühlzeit ergibt sich somit aus der gesamten Kühlzeit abzüglich der Nachdruckzeit und der Einspritzzeit. Sie beginnt nach Ablauf der Nachdruckphase und wird an den Spritzgießmaschinen üblicherweise als Einstellparameter eingegeben.

Um die Wirtschaftlichkeit der Fertigung zu erhöhen, muss geklärt werden, ob der Spritzgießzyklus Zeitreserven bietet, um die der Fertigungsprozess verkürzt werden kann.

In diesem Zusammenhang hat man festgestellt, dass der Schließkraftabbau je nach Konstruktion und Betrieb der Schließeinheit einige Zeit in Anspruch nimmt. Startet man den Schließkraftabbau also erst dann, wenn der Umgebungsdruck in der Kavität erreicht ist und ab dem das Aufrechterhalten des Schließdruckes nicht mehr notwendig ist, so geht wertvolle Zeit verloren.

Es ist bereits bekannt, die Oberflächentemperatur zur Festlegung der optimalen Kühlzeit zu nutzen, um nach Erreichen eines bestimmten Temperaturwertes das Werkzeug öffnen zu können. Allerdings ist man weiter auf die Einstellung und Abschätzung des Einrichters hinsichtlich der Gesamtzykluszeit angewiesen.

Das Document AT-B-384 772 offenbart ein Verfahren wobei die Schließkraft nach dem Siegelpunkt vermindert wird.

Aufgabe der vorliegenden Erfindung ist es, ein Verfahren zur Durchführung des Schließkraftabbaus bei einer Schließeinheit einer Spritzgießmaschine derart weiterzubilden, dass die Zykluszeit weiter optimiert wird.

Diese Aufgabe wird durch die im Anspruch 1 angegebenen Merkmale verfahrensmäßig gelöst.

Dabei ist ein Gedanke der vorliegenden Erfindung darin zu sehen, dass man die Zeit einkalkuliert, die der Schließdruckabbau benötigt und den Schließdruckabbau entsprechend vorzeitig startet, so dass die für den Schließdruckabbau benötigte Zeit nicht unnötig verloren geht. Allerdings kann der Schließdruckabbau nicht willkürlich gestartet werden. Zum einen muss natürlich die Geschwindigkeit bzw. die Zeitdauer bekannt sein, die der Schließdruckabbau benötigt (Durchschalten von Ventilen, Entspannung des Druckes in den Leitungen, Anlaufen von Elektromotoren, etc.). Zum anderen hängt die Gestattung der Einleitung des Schließdruckabbaus auch von den Produkt- und Materialeigenschaften ab, so nimmt die Kühlzeit für dicke Materialien im Quadrat zu, so dass der Zeitpunkt für den Schließkraftabbau maßgeblich von der Produktgeometrie abhängt. Beim Einrichten eines Spritzgießverfahrens werden erfindungsgemäß Druckkurven mittels eines an geeigneter Stelle im Werkzeug angeordneten Werkzeuginnendrucksensors ermittelt. Aus diesen Druckkurven wird eine Sollkurve abgeleitet und in der Maschinensteuerung hinterlegt. In Abhängigkeit von den Produkt- und Materialeigenschaften wird der Siegelpunkt bzw. der Punkt, ab dem der Schließdruck nicht mehr benötigt wird, ermittelt. Dieser Punkt kann beispielsweise die 1-bar-Linie sein, da dann von dem Produkt keine Kraft mehr auf das Werkzeug ausgeübt wird, als durch den normalen Luftdruck. Unter Einbeziehung der Abbaugeschwindigkeit des Schließdruckes kann dann ein Druck auf der Soll- bzw. Referenzkurve ermittelt werden, ab dem der Schließkraftdruckabbau begonnen werden kann.

Beim zyklusweisen Betrieb der Spritzgießmaschine wird sodann der Ist-Druck durch den Werkzeuginnendrucksensor während der Kühlphase kontinuierlich ermittelt und der Druckkraftabbau insbesondere dann durchgeführt, wenn der Ist-Druck den auf der Soll-Druck-Kurve markierten Wert erreicht hat. Durch die Ermittlung des Siegelpunktes bzw. des Druckpunktes, ab dem ein Schließdruck nicht mehr vorliegen muss, kann der frühestmögliche Zeitpunkt für einen Druckkraftabbau ohne Qualitätseinbußen ermittelt werden.

Die hinterlegte Soll-, Referenz- oder auch Masterkurve dient also zur Regelung des Schließkraftabbaus. Sie orientiert sich am gemessenen Ist-Wert und der zugrundeliegenden Abbaugeschwindigkeit des Kavitätsdruckes. Die Abbaugeschwindigkeit des Schließdruckes kann insbesondere auch als zeitliche Ableitung des Drucksignals gesehen werden, wobei der Druckabbau zum Ende der Kühlzeit näherungsweise einem linearen Verlauf nahe kommt. Anhand dieses Druckgradienten, der auch materialabhängig ist, kann die Einleitung des Schließkraftabbaus mitbestimmt werden.

Insgesamt wird also mit dem Schließkraftabbau begonnen, bevor die 1-bar-Linie erreicht wird. Dies spart zusätzliche Zykluszeit.

In den beigefügten Figuren ist dieser Zusammenhang nochmals deutlich gemacht. So zeigt
- Fig. 1: ein Druckdiagramm für die Zuhaltekraft einer Schließeinheit während der Geschlossen-Phase und
- Fig. 2: eine Druckkurve des Innendrucks in einer Werkzeugkavität während der Kühlphase.

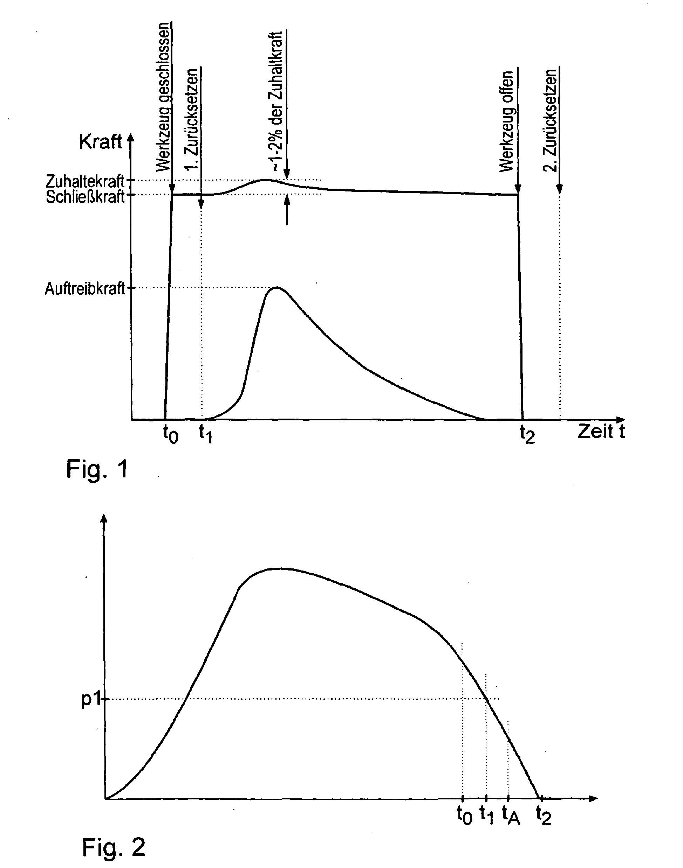

Aus Fig. 1 kann man erkennen, dass bei einem Zeitpunkt t₀ das Werkzeug geschlossen wird und zu diesem Zeitpunkt die (Schließ-)Kraft stark ansteigt. Beim Zeitpunkt t₁ wird der Einspritzvorgang gestartet. Ab diesem Zeitpunkt nimmt die Kraft, mit der die Schließeinheit zugehalten wird, bis zur sog. Auftreibkraft zu. (Die untere Kurve in Fig. 1 zeigt dabei in vergrößerter Form die über der Schließkraft liegende Druckkurvenform). Insgesamt addiert sich die Zuhaltekraft zur Schließkraft. Die Zuhaltekraft verträgt in der Regel 1 - 2 % der Schließkraft. Im unteren Bereich der Fig. 1, wo die Zuhaltekraft in vergrößerter Form dargestellt wird, sieht man, dass die Zuhaltekraft ab einem Maximalpunkt wieder kontinuierlich abfällt. Zum Zeitpunkt t₂ wird das Werkzeug dann geöffnet.

Um nun in erfindungsgemäßer Weise die Zykluszeit optimal zu gestalten, wird bereits vor Erreichen der sogenannten 1-bar-Linie der Schließkraftabbau gestartet. In Fig. 2 ist die 1-bar-Linie mit p1 gekennzeichnet. Die Druckkurve des Werkzeuginnendrucks erreicht die 1-bar-Linie zum Zeitpunkt t₁. Bereits vor dem Zeitpunkt t₁, nämlich zum Zeitpunkt t₀ wird der Schließkraftabbau gestartet. Dieser Zeitpunkt hängt von dem Zeitpunkt t₁, dem Druckgradienten des Werkzeuginnendrucks, der im Endbereich nahezu linear ist und der Zeitdauer für den Druckabbau ab. Zum Zeitpunkt t_{A} könnte dann das Werkzeug geöffnet werden. Zum Zeitpunkt t₂ wird das Werkzeug dann tatsächlich geöffnet.

Insgesamt kann somit im Bereich der Kühlphase durch einen vorzeitig eingeleiteten Schließkraftabbau die Zykluszeit verringert und damit die Effizienz eines Spritzgießprozesses erhöht. werden.

## Patentansprüche

1. Verfahren zur Durchführung des Schließkraftabbaus bei einer Schließeinheit einer Spritzgießmaschine,
bei dem
- beim Einrichten des Spritzgießverfahrens
-- eine oder mehrere reale Druckkurven des Werkzeuginnendruckes während der Kühlphase ermittelt und daraus abgeleitet eine Sollkurve in der Maschinensteuerung hinterlegt werden,
-- in Abhängigkeit von den Produkt- und Materialeigenschaften der Siegelpunkt auf der Druckkurve bestimmt wird,
-- die Abbaugeschwindigkeit des Schließdruckes der Schließeinheit ermittelt wird,
-- in Abhängigkeit vom Siegelpunkt und der Abbaugeschwindigkeit festgelegt wird, bei welchem Druck auf der Referenzkurve mit dem Schließkraftdruckkraftabbau begonnen wird und
- beim zyklusweisen Betrieb der Spritzgießmaschine
-- der Ist-Druck während der Kühlphase ermittelt wird und
-- der Druckkraftabbau dann durchgeführt wird, wenn der Ist-Druck den bei der Einrichtung bestimmten Soll-Druck erreicht hat.

2. Verfahren nach Anspruch 1,
**dadurch gekennzeichnet, dass**
bei der Ermittlung der Abbaugeschwindigkeit des Druckes der Druckgradient verwendet wird.

3. Verfahren nach Anspruch 1 oder 2,
**dadurch gekennzeichnet,**
**dass** beim Schließdruckabbau miteinbezogen wird, wann die 1 bar Druck-Linie erreicht ist.

4. Verfahren nach Anspruch 3,
**dadurch gekennzeichnet,**
**dass** ein linearer Druckabbau zum Ende der Kühlzeit bei der Festlegung und Berechnung verwendet wird.

5. Verfahren nach einem der vorhergehenden Ansprüche,
**dadurch gekennzeichnet,**
**dass** der Siegeldruck unter Verwendung einer hinterlegten mathematischen Formel bestimmt wird, bei der definierte Parameter, wie Produktgröße, maximale Materialdicke und Materialart, eingegeben werden.

## Claims

1. A method for performing the clamping force relaxation in a clamping unit of an injection molding machine, wherein
- during set-up of the injection molding process
-- one or more real pressure curves of the mold cavity pressure during the cooling phase are determined, and a set-point curve derived therefrom is stored in the machine control unit,
-- in dependence upon the product properties and material properties, the seal point is established on the pressure curve,
-- the relaxation speed of the clamping pressure of the clamping unit is determined,
-- it is specified, in dependence upon the seal point and the relaxation speed, at which pressure on the reference curve the clamping-force pressure relaxation is started, and
- during the cyclic operation of the injection molding machine
-- the actual pressure during the cooling phase is determined, and
-- the pressure force relaxation is performed when the actual pressure has reached the set-point pressure that was specified during set-up.

2. A method according to claim 1,
**characterized in that,**
in the determination of the relaxation speed of the pressure, the pressure gradient is used.

3. A method according to claim 1 or 2,
**characterized in that,**
in the clamping pressure relaxation, it is taken into account when the 1-bar pressure line has been reached.

4. A method according to claim 3,
**characterized in that**
a linear pressure relaxation toward the end of the cooling time is used in the specification and calculation.

5. A method according to any of the above claims,
**characterized in that**
the seal pressure is determined with the aid of a stored mathematical formula, in which defined parameters, such as product size, maximum material thickness and type of material are entered.

## Revendications

1. Procédé destiné à effectuer la réduction de la force de fermeture pour une unité de fermeture d'une machine de moulage par injection,
dans lequel
- lors de la configuration du procédé de moulage par injection
-- une ou plusieurs courbes de pression en valeurs réelles de la pression intérieure du moule sont déterminées pendant la phase de refroidissement et, à partir de cela, une courbe théorique est mémorisée dans la commande de la machine,
-- le point de scellement sur la courbe de pression est déterminé en fonction des propriétés du produit et du matériau,
-- la vitesse de réduction de la pression de fermeture de l'unité de fermeture est déterminée,
-- on définit en fonction du point de scellement et de la vitesse de réduction à quelle pression sur la courbe de référence la réduction de pression de la force de fermeture a commencé et
- lors d'un fonctionnement cyclique de la machine de moulage par injection
-- la pression effective est déterminée pendant la phase de refroidissement et
-- la réduction de la force de pression est alors réalisée lorsque la pression effective a atteint la pression théorique définie lors de la configuration.

2. Procédé selon la revendication 1,
**caractérisé en ce que**
le gradient de pression est utilisé lors de la détermination de la vitesse de réduction de la pression.

3. Procédé selon la revendication 1 ou 2,
**caractérisé en ce que**
lors de la réduction de la pression de fermeture, on tient compte du moment où la ligne de pression de 1 bar est atteinte.

4. Procédé selon la revendication 3,
**caractérisé en ce que**
une réduction de pression linéaire est utilisée à la fin de la période de refroidissement lors de la détermination et du calcul.

5. Procédé selon l'une quelconque des revendication précédentes,
**caractérisé en ce que**
la pression de scellement est déterminée au moyen d'une formule mathématique mémorisée dans laquelle des paramètres définis, comme la taille du produit, l'épaisseur maximale du matériau et le type de matériau, sont saisis.
